# EUROPEAN PATENT SPECIFICATION

(11) **EP 2 495 690 B1**
(45) Date of publication and mention of the grant of the patent: **13.05.2015**
(21) Application number: 11156476.1
(22) Date of filing: 01.03.2011
(51) Int. Cl.: G06K 19/073, G07F 7/10, G06F 21/31, G06F 21/62

(54) **Transponder and method for monitoring access to application data in the transponder**
Transponder und Verfahren zur Überwachung des Zugriffs auf Anwendungsdaten im Transponder
Transpondeur et procédé de surveillance d'accès aux données d'application du transpondeur

(43) Date of publication of application: 05.09.2012
(73) Proprietor: NXP B.V., 5656 AG Eindhoven (NL)
(72) Inventor: Steiner, Mario, 5656 AE Eindhoven (NL)
(74) Representative: Krott, Michel

(56) References cited:
- EP-A2- 1 239 427
- EP-A2- 1 603 041
- US-A- 5 715 431
- US-A1- 2004 073 846

## Description

### FIELD OF THE INVENTION

The present invention relates to a transponder, in particular a RFID-tag, to a method and to a reader for monitoring access to application data stored in the transponder. In particular, the present invention relates to a transponder, to a method and to a reader for monitoring access to application data which are stored in the transponder in an unprotected manner.

### BACKGROUND OF THE INVENTION

Data stored in a transponder, in particular a RFID-device (radio frequency identification), may be stored in a password protected manner in a memory of the transponder. The password protection may comprise read or write protection of the data by using a password thereby protecting the data in the memory against unauthorized access and tampering of data. Read or write protecting the memory of a RFID-device by using a password may not be applicable in some use cases. In particular, the distribution of the passwords or validating the data may require a great effort. This may in particular be very time-consuming. Therefore, very often a validation of memory content by cross-checking with database entries may not be done. Thus the risk evolves that any unprotected memory content of a RFID-tag may be copied to another tag or may be changed. This may comprise tampering or modifying the identity of a high priced item to a low cost good.

US 5,715,431 discloses a method of writing data to non-volatile memory in a smart card, wherein a data write operation is performed to write data to a first region of the non-volatile memory and information is written to a second region of the non-volatile memory signifying a valid data write if the data write operation is performed satisfactorily. If the preceding write operation was unsuccessful, a recovery procedure is implemented. If the recovery is successful, the card operation can be run, otherwise the card is unusable.

Document US 5,715,431 discloses a tamper-proof security measure in data writing to non-volatile memory, wherein a write status region of a EEPROM is examined on each reset of the smartcard.

Document EP 1 239 427 A2 discloses a circuit arrangement and a method for recognizing an access violation during execution of a program, wherein a specially defined access violation code indicates the access violation and the access violation codes may evolve in form of a violation indication.

Document US 2004/0073846 A1 discloses a memory device, a terminal apparatus and a data repair system, wherein a system includes a server that manages data and check information for checking damage to the data, wherein terminal apparatus acquires the data and the check information from the server and the memory device stores the data acquired by terminal apparatus into non-tamper-resistant memory area and the check information acquired by terminal apparatus into tamper-resistant memory area.

Document EP 1 603 041 A2 discloses a disc drive, a control method thereof and disc-falsification detection method wherein every block in the storage medium employed in the disc drive is provided with a flag area that can be updated by the disc drive but only referred to by a host, a falsification can be detected even if the falsification results from a write operation carried out by using an illegal access path.

There may be a need for a transponder, a method and a reader for monitoring access to application data stored in the transponder, wherein in particular the application data are stored in an unprotected manner in a data storage of the transponder. In particular, there may be a need for a transponder, a method and a reader providing high data security and/or traceability and having an improved reliability, in particular regarding data security, in particular allowing monitoring in a fast and reliable way.

Further, there may be a need for a transponder, a method and a reader for monitoring access to application data stored in the transponder, wherein the monitoring may be performed in a simple manner and in a time effective manner and further in a reliable manner.

### OBJECT AND SUMMARY OF THE INVENTION

According to an embodiment of the present invention, a transponder, in particular a RFID-tag, for wirelessly receiving external data and for monitoring access to application data is provided, wherein the transponder comprises a data storage (in particular a non-volatile data storage, that can retain the stored information even when not powered, such as read-only memory, flash memory, a semiconductor memory or the like) for storing application data (in particular for storage of an electronic production code (EPC), for storing an identification information of an item, for storing specification data or properties of an item, for storing of data similar to data of a barcode of an item); a data storage control region (a particular portion in a memory of the transponder, in particular a portion of a system memory or a portion of the data storage, wherein the data source control region may have a predetermined size, in particular 1 bit, 2 bit, 3 bit, 4 bit, 5 bit, 6 bit, 7 bit, 8 bit or 1 or more bytes); and a data storage access controller (which may be implemented in hardware and/or in software, in particular comprised as a module in an integrated circuit of the transponder) configured to store (i.e. to save or to write into memory of the transponder), in the data storage control region, data indicative of an access (in particular a write access and/or a read access) of or to the application data stored in the data storage, when the application data was accessed (in particular read and/or written) based on the external data (such that if the external data comprise data indicative of a request for writing and/or reading the application data or at least a portion of the application data stored in the data storage), wherein the data storage control region is a read only data storage region, which is protected from being changed by the external data..

In particular the external data may not comprise any authorization such that the external data may access or interact with the transponder in an authorized manner. In particular the application data may be stored in a storage region different from the data storage control region.

The transponder may be configured as a RFID-tag which may comprise an integrated circuit for storing and processing information, modulating and demodulating a radio frequency (RF) signal and further comprising an antenna for receiving and transmitting RFID-tag may be a passive RFID-tag which may have no power source and may require an external electromagnetic field to initiate a signal transmission or the RFID-tag may be an active RFID-tag which may contain a battery and which may be adapted to transmit signals powered by the internal battery.

In particular, the transponder may be configured to receive and transmit radio frequency signals, wherein the data may in particular comprise an electronic production code (EPC) which may identify and/or describe and/or characterize an item to which the transponder may be attached or affixed. The EPC may be a particular form of the application data which are stored in the data storage of the transponder.

In particular, the application data may be stored in the data storage of the transponder after manufacturing the transponder before shipping the transponder to the final consumer, such as a supermarket, a shopping market, a shopping mall or the like. In particular, during shipping the transponder having the application data stored in the data storage to the final consumer there may be the risk that an unauthorized third party, in particular using a reader device for communicating with the transponder, may access the application data, wherein the access may in particular comprise reading the application data and/or changing the application data. In particular, the application data may be freely accessed by any reader device which uses the appropriate radio frequency signals to communicate with the transponder. In case a third party accesses the application data stored in the data storage, the data storage access controller will store the data in the data storage control region, wherein the data (such as a one-bit flag) are indicative of the access to the application data stored in the data storage. Thus, in the data storage control region data are saved from which it may be decided, whether there has been an access to the application data stored in the data storage or not.

According to an embodiment, the data indicative of the access to the application data stored in the data storage may also be indicative of a number of times an access to the application data stored in the data storage has occurred.

According to an embodiment, the data indicative of the access to the application data stored in the data storage may also be indicative of a type of an access (such as read or write) to the application data stored in the data storage has occurred.

In particular, the data storage control region may be used to indicate any attempt to access, to alter and/or to tamper the application data stored in the data storage. Thereby, there may be no need to cross-check with databases and there may be no need to distribute a password to determine, whether there has been access to the application data stored in the data storage. In particular, the data stored in the data storage control region may signal whether there has been an attempt of an access to the application data stored in the data storage.

According to an embodiment, the data storage access controller is configured to store, in the data storage control region, data indicative of a change (when modified application data has been stored in the data storage) to the application data stored in the data storage, when the application data was changed (in particular, when at least a portion of the application data was changed or written or modified) based on the external data (when for example the external data are indicative of a write request to write modified or changed application data into the data storage to overwrite the application data which were originally stored in the data storage).

In particular, the change to the application data may comprise changing an electronic production code identifying a particular item to which the transponder is to be attached or is actually attached. Later on, by accessing the data indicative of the change to the application data, an authorized user may determine, whether a change to the application data occurred. If the authorized user detects that such a change to the application data occurred, the authorized user may erase the modified, hampered application data and may rewrite the original application data into the data storage. Then, the transponder may be further used.

In particular, detecting that the application data has been changed does not require reading out the application data and comparing the application data with data stored in a database external to the transponder. Thereby, the detection, whether there has been a change to the application data may be performed in a fast and reliable manner. Further, correction of the hampered application data may be facilitated.

According to an embodiment, the data storage access controller is configured to store, in the data storage control region, data indicative of a read of the application data stored in the data storage, when the application data was read (being a particular type of an access) based on the external data (when for example the external data are indicative of a read request for reading the application data). In particular, the external data may be received at the transponder from an unauthorized third party attempting to read out the application data in an unauthorized manner. In particular, the third party may use the read application data to program another transponder to have the same or similar application data as the transponder from which the third party received the application data. The other transponder may then be used in an illegal manner. However, having the transponder specified above, the authorized user may detect that the application data has been read from a third party and may perform counter-measures.

According to an embodiment of the invention the data storage access controller is configured to store, in the data storage control region, data indicative of an error of an operation triggered by the external data. In particular the external data may trigger an operation in the transponder, such as a read and/or a write operation. Thereby the operation may require additional time and/or additional external data in order to be completed properly. However, the operation may not complete properly, because e.g. the additional external data are not available (the transponder may have been withdrawn to early from a reading/writing device), an interference occurred with erroneous external data (by another transponder or reader device) in which case a flag may be set in the storage control region.

In particular, whenever an operation (of the transponder or involving the transponder, such as a communication operation) triggered by the external data is initiated, data indicative of an error of the operation may be stored in the data storage control region. Only if the operation completed properly the data indicative of an error of the operation may be erased in the data storage control region.

According to an embodiment, the data storage content control region is configured to store exactly one bit. Thereby, the data indicative of an access to the application data may occupy only a very short portion of the available memory in the transponder. Thereby, the transponder may be provided in a compact configuration. In particular, when the data storage content control region or the data storage control region is configured to store exactly one bit, the bit may be set to logical true (or logical false), when the application data was accessed (in particular changed or/and read) based on the external data.

In particular, the data indicative of an access to the application data may be read out by an authorized user, in the case where the data storage control region is freely accessible for reading. Thereby, a simple procedure may be performed to determine, whether the application data has been accessed. In particular, only one bit may be needed to be read by for example the authorized user or authorized owner, in order to determine, whether there has been access to the application data.

According to an embodiment of the invention, the data storage control region is a read only data storage region (i.e. a data storage region which may be read but which may not be written, in particular by an external device, such as a reader device), which is protected from being changed by the external data. Thus, in particular, external data aiming for changing the content or data in the data storage control region may be prohibited from changing the data stored in the data storage control region. Thereby, the data storage control region may be protected from being changed by, in particular an unauthorized third party. Thereby, data integrity and data safety, in particular the reliability of the monitoring of access may be improved, thus improving the transponder.

According to an embodiment of the invention, the data storage control region is a data storage region that can be changed (i.e. modified, in particular comprising writing data to the data storage region) by external data upon authorization, wherein in particular the authorization may comprise inputting one or more passwords. Thereby, the data storage control region may be protected from unauthorized access, in particular from unauthorized modification.

According to an embodiment of the present invention, the data storage control region is a data storage region that can be changed by a system command, wherein the system command is a command internal to the transponder. In particular, using a particular external hardware having extended capabilities compared to a conventional reader device, the system command may be initiated or may be executed. Executing or initiating the system command may require proprietary hardware and/or software and/or authorization, in particular confidential authorization accessible only to the manufacturer of the transponder.

According to an embodiment of the invention, the data storage comprises an unprotected storage region (which may be freely accessed by any reader device being adapted for communication with the transponder, wherein in particular the unprotected storage region may not be password-protected) in which the application data are storable or in particular in which the application data are stored. Thus, the application data may be freely accessed by any conventional reader which has been configured for the appropriate radio frequency and data communication protocol. Having the application data stored in the unprotected storage region may simplify access to the application data and may accelerate the configuration of the transponder. In particular, it may not be required to distribute one or more passwords from the original manufacturer to a seller and from the seller to the final consumer which may be cumbersome and error-prone. Thus, having the transponder ready for use may be facilitated.

According to an embodiment, the data storage comprises the data storage control region. Thus, in the data storage where the application data are stored also the data storage control region is included. Nevertheless, the data storage control region may be a particularly protected data storage region which may not be freely accessible by a conventional reader device. Nevertheless, the data storage structure may be adapted to accompany the application data as well as the data indicative of the access to the application data. Thereby the hardware for storing data of the transponder may be simplified, reducing the cost of the transponder.

According to an embodiment, the transponder further comprises a system memory, wherein the system memory comprises the data storage control region, wherein in particular the system memory may not be easily accessed from a reader device external to the transponder. In particular, the system memory may be primarily accessed by the processor comprised in the transponder for internal processing, modulating and demodulating of signals to be received and/or transmitted to a reader device. In particular, the system memory may not be accessed from an external reader. Having the data storage control region comprised in the system memory may protect the data storage control region from unauthorized access by a third party. Thereby, data safety and integrity may be improved.

According to an embodiment, the transponder further comprises a reception module configured for receiving the external data wirelessly transmitted to the transponder, wherein in particular the reception module is also configured for receiving an access monitoring request, in particular from a reader, requesting the data stored in the data storage control region, such that the reader device is enabled to determine, whether there has been an access to the application data stored in the data storage of the transponder. In particular the reception module may be enabled to demodulate received radio frequency signals, wherein the receiving the radio frequency signals may comprise receiving an electromagnetic wave via an antenna.

According to an embodiment of the invention, the transponder further comprises a transmission module configured for transmitting at least a portion of the application data and/or the data stored in the data storage control region, in particular upon receiving the external data wirelessly transmitted to the transponder. Thereby, the application data and/or the data stored in the data storage control region may be read out, for example by a reader, in order to receive the application data and/or the data stored in the data storage control region. In particular, an electronic product code may be received from the transponder by transmitting the application data using the transmission module.

According to an embodiment of the invention, the transponder is configured to transmit the data indicative of an access to the application data (in particular indicative of a change to the application data and/or indicative of a read of the application data) stored in the data storage upon receiving an access monitoring request, in particular from a reader. Thus, the reader may transmit an access monitoring request to the transponder and upon receiving data storage upon receiving an access monitoring request, in particular from a reader. Thus, the reader may transmit an access monitoring request to the transponder and upon receiving the access monitoring request the transponder may transmit the data indicative of the access to the application data stored in the data storage. Based on the received data indicative of the access to the application data the reader may determine, whether there has been an access to the application data or not.

It should be understood that any features (individually or in any combination) disclosed, described, explained, mentioned employed for and/or applied to a transponder according to an embodiment may (individually or in any combination) apply to, be used for or be employed for a method for monitoring access to application data in a transponder according to an emodiment or to a reader for wirelessly communicating with a transponder and for monitoring access to application data of the transponder and vice versa.

According to an embodiment, a method for monitoring access to application data in a transponder is provided, wherein the method comprises wirelessly receiving external data (in particular external data by an unauthorized third party the external data aiming to access application data in the transponder) by the transponder, in particular a RFID-tag, the transponder comprising a data storage for storing the application data; accessing, based on the external data (which may in particular be indicative of writing and/or reading the application data), the application data, wherein the application data are stored in the data storage of the transponder; and storing, in a data storage control region of the transponder, data indicative of an access to the application data stored in the data storage, wherein the data storage control region is a data storage region, which is protected from being changed by the external data.

In particular, the method may further comprise receiving (in particular from a reader device) an access monitoring request by the transponder, wherein the access monitoring request requests the data stored in the data storage control region, in order to determine, whether there has been access to the application data stored in the data storage of the transponder. Further, the method may comprise transmitting the data stored in the data storage control region to the reader device.

According to an embodiment, a reader for wirelessly communicating with a transponder and for monitoring access to application data of the transponder is provided, wherein the transparent is in particular a RFID-tag, wherein the reader comprises a transmission module (in particular comprising circuitry for modulating a radio frequency signal according to a transmission protocol of the transponder) for wirelessly transmitting an access monitoring request to the transponder, wherein the access monitoring request requests data was accessed based on external data (previously received by the transponder from in particular another unauthorized reader device); and a reception module for receiving the data being indicative of the access to the application data.

In particular, the reader may be adapted to scan a plurality of transponders for determining, whether application data in the plurality of transponders has been accessed, in particular has been changed or has been read by, in particular an unauthorized third party. In particular, determining, whether the application data in the plurality of transponders has been accessed may not require reading for each of the plurality of transponders the application data and comparing the application data to data in a database external to the plurality of transponders. Thereby, the monitoring may be performed in a fast and reliable manner.

In case it is determined by the reader that one of the plurality of transponders has been accessed by a third party, the particular one of the transponders may further be examined, for example by reading the modified application data and comparing the modified application data to original application data stored in a data storage or database external to the particular transponder. Further, the original application data may be restored in the particular transponder.

According to an embodiment of the present invention, a system comprising a transponder according to an embodiment and comprising a reader according to an embodiment is provided, wherein the system is adapted for performing a method according to an embodiment.

### BRIEF DESCRIPTION OF THE DRAWINGS

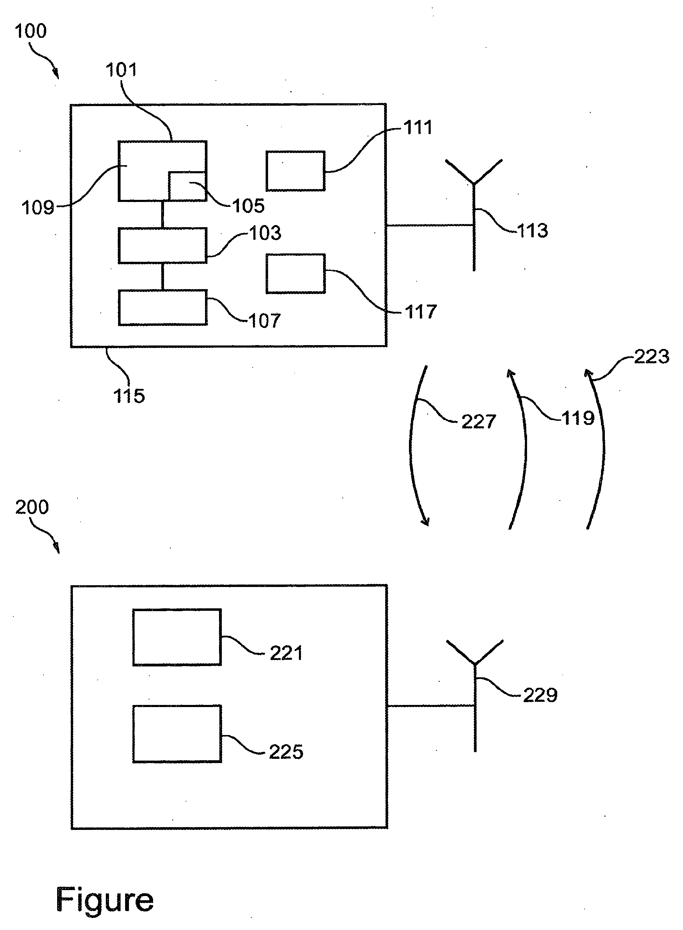

The invention will be described in more detail hereinafter with reference to examples of embodiment but to which the invention is not limited. Embodiments of the present invention are now described with reference to the accompanying drawings. The invention is not limited to the described or illustrated embodiments. Reference signs in the claims are not limiting the subject-matter of the invention. The illustration in the drawing is in schematic form.

The Figure schematically illustrates a system according to an embodiment comprising a transponder according to an embodiment and comprising a reader according to an embodiment performing a method for monitoring access to application data in the transponder according to an embodiment.

### DESCRIPTION OF EMBODIMENTS

According to an embodiment, only one "read only" bit of the memory of the transponder may be used to indicate any attempt to alter/tamper data of the transponder. Without the need to cross-check with database and without the need to distribute a password any attempt to manipulate memory data may be signalled by the "read only" bit. Every write or every read attempt may set the specific bit to the memory. In particular, the bit may be any readable or even the system memory. The flagging (i.e. the setting the bit to 1 or 0) may be permanent or may be resettable by a custom command. If the flag is part of the open memory (for example providing free access) one may select flagged tags only. In particular, if it is detected that there has been access, in particular write access, to the application data, the tampered memory content may be deleted without the need to cross-check data with very little effort.

Data on an RFID-tag may be stored in an unprotected manner, although protection methods may be available, such as write protection and read/write protection. However, any kind of protection may take much effort to globally distribute password for for example millions of tags. Further, permanent write protection results in permanently locking the device, thereby eliminating the possibility to take advantage of storing product-related data on the device later on.

In order to detect access to the application data, a flag in the non-volatile memory is proposed according to an embodiment of the invention, wherein the flag indicates any change or attempt to change data after initialization of the transponder is performed. This may eliminate the need to validate data on RFID-devices.

In particular, according to an embodiment, one bit of the non-volatile memory, a flag, may indicate every (unauthorized) write attempt or read attempt, after a RFID-device has finally been initialized. The initialization of the transponder may comprise storing application data, in particular comprising electronic production code, in the transponder, i.e. according to an embodiment, an RFID-tag. Taking the advantage of the RFID and its memory and writing to the device may be still possible, but the owner of the device, the transponder, may notice any attempt to change/manipulate or read the application data.

Every write/read attempt may set a logical one of a specific bit of the memory. This may be any readable or even the system memory.

The system illustrated in the Figure comprises a transponder 100 according to an embodiment and a reader 200 according to an embodiment of the invention.

The transponder 100 comprises a data storage 101 for storing application data, such as an electronic production code comprising data similar to data of a conventional barcode. In particular, the application data may be stored in an unprotected storage region 109 of the data storage 101.

The transponder 100 further comprises a data storage access controller 103 which is configured to store in a data storage control region 105 data which is indicative, whether the application data stored in the data storage 101 has been accessed. In the example illustrated in the Figure the data storage control region 105 is comprised in the data storage 101. Thus, the data storage control region 105 may be accessed (e.g. read out) by for example the reader device 200 illustrated in the Figure. In other embodiments, the data storage control region 105 may be arranged for example in a system memory 107 being accessible by internal processes running on the transponder 100.

In particular, the data storage control region 105 is configured to store exactly one bit. In particular, the data storage control region 105 is in the illustrated example a read only region of the data storage 101.

Further, the transponder 100 comprises a reception module 111 which is configured for receiving external data which is wirelessly transmitted for example from the reader 200 to the transponder 100. Thereby, in particular the transponder comprises an antenna 113 which is electrically connected to the integrated circuit 115 harboring electronic circuitry including the data storage 101, the data storage access controller 103, the system memory 107, the reception module 111 and also a transmission module 117, wherein the transmission module is configured for transmitting at least a portion of the application data stored in the data storage 101.

The reader 200 comprises a transmission module 221 for wirelessly transmitting an access monitoring request 223 to the transponder 100, wherein the access monitoring request 223 requests data indicative of an access to application data stored in the data storage 101 of the transponder 100, wherein these data is stored in the data storage control region 105 of the transponder 100. Further, the reader 200 comprises a reception module 225 for receiving the data stored in the data storage control region 105, wherein these data are transmitted by the transmission 227 from the transponder 100 to the reader 200. Thereby, the reader 200 receives the transmission 227 via the antenna 229.

For illustrating an unauthorized access to the application data stored in the data storage 101 of the transponder 100 a third party may transmit external data 119 to the transponder 100, wherein the external data 119 may aim to access the application data stored in the data storage 101. In particular, the external data may aim to change and/or read the application data stored in the data storage 101. Upon accessing the application data, the data storage access controller 103 may store a logical true bit in the data storage control region 105 to indicate that an unauthorized access to the application data stored in the data storage 101 has occurred.

## Claims

1. Transponder (100), in particular a RFID-tag, for wirelessly receiving external data (119) and for monitoring access to application data, the transponder comprising:
a data storage (101) for storing application data;
a data storage control region (105); and
a data storage access controller (103) configured to store, in the data storage control region (105), data indicative of an access to the application data stored in the data storage (101), when the application data was accessed based on the external data,
wherein the data storage control region is a data storage region which is protected from being changed by the external data.

2. Transponder according to claim 1, wherein the data storage access controller (103) is configured to store, in the data storage control region (105), data indicative of a change to the application data stored in the data storage (101), when the application data was changed based on the external data.

3. Transponder according to claim 1 or 2, wherein the data storage access controller (103) is configured to store, in the data storage control region (105), data indicative of a read of the application data stored in the data storage (101), when the application data was read based on the external data.

4. Transponder according to one of the preceding claims, wherein the data storage access controller (103) is configured to store, in the data storage control region (105), data indicative of an error of an operation triggered by the external data.

5. Transponder according to one of the preceding claims, wherein the data storage control region (105) is configured to store exactly one bit, wherein in particular, the bit is set to logical true, when the application data was accessed based on the external data.

6. Transponder according to one of claims 1 to 5, wherein the data storage control region (105) is a data storage region that can be changed by external data upon authorization.

7. Transponder according to one of the preceding claims, wherein the data storage (101) comprises an unprotected storage region (109) in which the application data are storable.

8. Transponder according to one of the claims 1 to 7, wherein the data storage (101) comprises the data storage control region (105).

9. Transponder according to one of the claims 1 to 7, further comprising:
a system memory (107), wherein the system memory comprises the data storage control region.

10. Transponder according to one of the preceding claims, further comprising:
a reception module (111) configured for receiving the external data (119) wirelessly transmitted to the transponder.

11. Transponder according to one of the preceding claims, further comprising:
a transmission module (117) configured for transmitting at least a portion of the application data, in particular upon receiving the external data (119) wirelessly transmitted to the transponder.

12. Transponder according to one of the preceding claims, wherein the transponder is configured to transmit the data indicative of an access to the application data stored in the data storage upon receiving an access monitoring request (223), in particular from a reader (200).

13. Method for monitoring access to application data in a transponder, the method comprising:
wirelessly receiving external data (119) by the transponder (100), in particular a RFID-tag, the transponder comprising a data storage (101) for storing the application data;
accessing, based on the external data, the application data, wherein the application data are stored in the data storage (101) of the transponder (100); and
storing in a data storage control region (105) of the transponder data indicative of an access to the application data stored in the data storage (101),
wherein the data storage control region is a data storage region, which is protected from being changed by the external data.

## Patentansprüche

1. Transponder (100), insbesondere ein RFID-Tag, zum kabellosen Empfangen externer Daten (119) und zum Überwachen von Zugriff auf Anwendungsdaten, wobei der Transponder aufweist:
einen Datenspeicher (101) zum Speichern von Anwendungsdaten;
eine Datenspeicher Steuer Region (105); und
einen Datenspeicher Zugriff Controller (103), eingerichtet zum Speichern, in der Datenspeicher Steuer Region (105), von Daten, welche indikativ für einen Zugriff auf die Anwendungsdaten sind, welche in dem Datenspeicher gespeichert (101) sind, wenn auf die Anwendungsdaten basierend auf den externen Daten zugegriffen wurde,
wobei die Datenspeicher Steuer Region eine Datenspeicher Region ist, welche dagegen geschützt ist, mittels der externen Daten geändert zu werden.

2. Transponder gemäß Anspruch 1, wobei der Datenspeicher Zugriff Controller (103) eingerichtet ist zum Speichern, in der Datenspeicher Steuer Region (105), von Daten, welche indikativ für ein Ändern von den Anwendungsdaten sind, welche in dem Datenspeicher (101) gespeichert sind, wenn die Anwendungsdaten basierend auf den externen Daten geändert wurden.

3. Transponder gemäß Anspruch 1 oder 2, wobei der Datenspeicher Zugriff Controller (103) eingerichtet ist zum Speichern, in der Datenspeicher Steuer Region (105), von Daten, welche indikativ für ein Lesen von den Anwendungsdaten sind, welche in dem Datenspeicher (101) gespeichert sind, wenn die Anwendungsdaten basierend auf den externen Daten gelesen wurden.

4. Transponder gemäß einem der vorhergehenden Ansprüche, wobei der Datenspeicher Zugriff Controller (103) eingerichtet ist zum Speichern, in der Datenspeicher Steuer Region (105), von Daten, welche indikativ für einen Fehler von einer Operation sind, welche mittels der externen Daten getriggert wurde.

5. Transponder gemäß einem von den vorhergehenden Ansprüchen, wobei die Datenspeicher Steuer Region (105) eingerichtet ist zum Speichern exakt eines Bits, wobei insbesondere das Bit auf ein logisches "wahr" gesetzt ist, wenn auf die Anwendungsdaten basierend auf den externen Daten zugegriffen wurde.

6. Transponder gemäß einem der Ansprüche 1 bis 5, wobei die Datenspeicher Steuer Region (105) eine Datenspeicher Region ist, welche mittels externer Daten bei Autorisierung geändert werde kann.

7. Transponder gemäß einem der vorhergehenden Ansprüche, wobei der Datenspeicher (101) eine ungeschützte Speicher Region (109) aufweist, in welcher die Anwendungsdaten speicherbar sind.

8. Transponder gemäß einem von den Ansprüchen 1 bis 7, wobei der Datenspeicher (101) die Datenspeicher Steuer Region (105) aufweist.

9. Transponder gemäß einem von den Ansprüchen 1 bis 7, ferner aufweisend:
einen Systemspeicher (107), wobei der Systemspeicher die Datenspeicher Steuer Region aufweist.

10. Transponder gemäß einem von den vorhergehenden Ansprüchen, ferner aufweisend:
ein Empfangsmodul (111), eingerichtet zum Empfangen der externen Daten (119), welche kabellos an den Transponder übermittelt wurden.

11. Transponder gemäß einem von den vorhergehenden Ansprüchen, ferner aufweisend:
ein Übertragungsmodul (117), eingerichtet zum Übertragen von zumindest einem Teil von den Anwendungsdaten, insbesondere bei Empfangen der externen Daten (119), welche kabellos an den Transponder übermittelt wurden.

12. Transponder gemäß einem von den vorhergehenden Ansprüchen, wobei der Transponder eingerichtet ist zum Übermitteln der Daten, welche indikativ für die Anwendungsdaten sind, welche in dem Datenspeicher gespeichert sind, bei Empfangen einer Zugriff-Überwachungsanfrage (223), insbesondere von einem Leser (200).

13. Verfahren zum Überwachen eines Zugriffs auf Anwendungsdaten in einem Transponder, das Verfahren aufweisend:
kabelloses Empfangen externer Daten (119) mittels des Transponders (100), insbesondere eines RFID-Tags, wobei der Transponder einen Datenspeicher (101) zum Speichern der Anwendungsdaten aufweist;
Zugreifen, basierend auf den externen Daten, auf die Anwendungsdaten, wobei die Anwendungsdaten in dem Datenspeicher (101) von dem Transponder (100) gespeichert sind; und
Speichern in einer Datenspeicher Steuer Region (105) von den Transponderdaten, welche indikativ für einen Zugriff auf die Anwendungsdaten sind, welche in dem Datenspeicher (101) gespeichert sind,
wobei die Datenspeicher Steuer Region eine Datenspeicher Region ist, welche dagegen geschützt ist mittels der externen Daten geändert zu werden.

## Revendications

1. Transpondeur (100), en particulier étiquette RFID, pour recevoir sans fil des données externes (119) et pour surveiller l'accès à des données d'application, ce transpondeur comprenant :
un moyen de stockage des données (101) pour stocker des données d'application ;
une région de commande de stockage des données (105) ; et
un contrôleur d'accès au stockage des données (103) configuré de façon à stocker, dans la région de commande de stockage de données (105), des données indicatrices d'un accès aux données d'application stockées dans le moyen de stockage des données (101), lorsque les données d'application ont été accédées en se basant sur les données externes,
dans lequel la région de commande de stockage des données est une région de stockage des données qui est protégée contre tout changement par les données externes.

2. Transpondeur selon la revendication 1, dans lequel le contrôleur d'accès au stockage des données (103) est configuré de façon à stocker, dans la région de commande de stockage des données (105), des données indicatrices d'un changement aux données d'application stockées dans le moyen de stockage des données (101), lorsque les données d'application ont été changées en se basant sur les données externes.

3. Transpondeur selon la revendication 1 ou 2, dans lequel le contrôleur d'accès au stockage des données (103) est configuré de façon à stocker, dans la région de commande de stockage des données (105), des données indicatrices d'une lecture des données d'application stockées dans le moyen de stockage des données (101), lorsque les données d'application ont été lues en se basant sur les données externes.

4. Transpondeur selon l'une quelconque des revendications précédentes, dans lequel le contrôleur d'accès au stockage des données (103) est configuré de façon à stocker, dans la région de commande de stockage de données (105), des données indicatrices d'une erreur d'une opération déclenchée par les données externes.

5. Transpondeur selon une des revendications précédentes, dans lequel la région de commande de stockage de données (105) est configurée de façon à stocker exactement un bit, dans lequel, en particulier, ce bit est réglé sur vrai logique, lorsque les données d'application ont été accédées en se basant sur les données externes.

6. Transpondeur selon une des revendication 1 ou 5, dans lequel la région de commande de stockage des données (105) est une région de stockage des données qui peut être changée par des données externes sur autorisation.

7. Transpondeur selon une des revendications précédentes, dans lequel le moyen de stockage des données (101) comprend une région de stockage non protégée (109) dans laquelle les données d'application peuvent être stockées.

8. Transpondeur selon une des revendication 1 à 7, dans lequel le moyen de stockage des données (101) comprend la région de commande de stockage des données (105).

9. Transpondeur selon une des revendications 1 à 7, comprenant en outre :
une mémoire de système (107), cette mémoire de système comprenant la région de commande de stockage des données.

10. Transpondeur selon une des revendications précédentes, comprenant en outre :
un module de réception (111) configuré pour recevoir les données externes (119) transmises sans fil au transpondeur.

11. Transpondeur selon une des revendications précédentes, comprenant en outre :
un module de transmission (117) configuré pour transmettre au moins une partie des données d'application, en particulier lors de la réception des données externes (119) transmises sans fil au transpondeur.

12. Transpondeur selon une des revendications précédentes, ce transpondeur étant configuré de façon à transmettre les données indicatrices d'un accès aux données d'application stockées dans le moyen de stockage des données lors de la réception d'une demande de surveillance d'accès (223), en particulier provenant d'un lecteur (200).

13. Procédé pour surveiller l'accès à des données d'application dans un transpondeur, ce procédé comprenant :
la réception sans fil de données externes (119) par le transpondeur (100), en particulier une étiquette RFID, le transpondeur comprenant un moyen de stockage des données (101) pour stocker les données d'application ;
l'accès, en se basant sur les données externes, aux données d'application, les données d'application étant stockées dans le moyen de stockage des données (101) du transpondeur (100) ; et
le stockage, dans une région de commande de stockage de données (105) du transpondeur, des données indicatrices d'un accès aux données d'application stockées dans le moyen de stockage des données (101),
dans lequel la région de commande de stockage des données est une région de stockage des données, qui est protégée contre tout changement par les données externes.
